# EUROPEAN PATENT SPECIFICATION

(11) **EP 0 393 415 B1**
(45) Date of publication and mention of the grant of the patent: **13.01.1993**
(21) Application number: 90106361.0
(22) Date of filing: 03.04.1990
(51) Int. Cl.: C25F 3/14, C25F 7/00

(54) **Electrolytic etching apparatus and method for marking metal tubes with sequential identification numbers**
Einrichtung zum elektrolytischen Ätzen und Markierungsverfahren für Metallrohre mit aufeinanderfolgenden Identifikationsnummern
Appareil de décapage électrolytique et procédé de marquage pour des tuyaux métalliques avec des numéros d'identification séquentiels

(30) Priority: 19.04.1989 US 340199
(43) Date of publication of application: 24.10.1990
(73) Proprietor: WESTINGHOUSE ELECTRIC CORPORATION, Pittsburgh Pennsylvania 15222 (US)
(72) Inventor: Catanese, John Anthony, Seward, Pennsylvania 15954 (US); Saunders, Susan Raz, Acme, Pennsylvania 15610 (US)
(74) Representative: Gallo, Wolfgang, Dipl.-Ing. (FH)

(56) References cited:
- GB-A- 2 054 462
- US-A- 4 082 632
- US-A- 4 132 618

## Description

The present invention relates generally to electrolytic marking apparatus and, more particularly, to an electrolytic etching apparatus for marking metal tubes with sequential identification indicia.

In the manufacture of nuclear fuel rods, it is desirable at the start of the manufacturing process to temporarily mark the fuel rod cladding tubes for purposes of traceability through the process. A marking method capable of providing an identification marking on the tube without significantly disturbing the surface or metallurgical characteristics of the tube is desired.

One such method is electrolytic etching or marking which is well-known in the prior art such as disclosed, for example, in U. S. Patents No. 2,967,813, 3,290,236 and 4,132,618. According to US-A-3290236, a metal part to be marked is supported on a base electrode, an absorbent pad attached to a head of an upper electrode located above the part is saturated with an electrolyte from an overhead reservoir, and a stencil bearing the identification indicia is mounted in a holder attached to a vertically reciprocable member which also carries the upper electrode and overhead reservoir. The holder positions the stencil below the pad and above the part.

Electrolytical marking of the part is effected by lowering the reciprocable member to cause the movable electrode head and pad thereon to press the stencil against the part, whereupon electrical energy is applied to the electrodes to effect an electrolytic etching action through the coaction of the electrolytic solution and electrical energy operating through the stencil.

Although this conventional apparatus may be suitable for marking some metal parts, it is not well suited to be used for marking large numbers of tubes, such as nuclear fuel rod cladding tubes, because the stencil employed with this apparatus contains only one identification number and is held stationary by the holder so that it must be replaced every time a different identification number is to be applied. Thus, this conventional apparatus would be too slow and its use therefore not feasible in conjunction with the production of large numbers of tubes to be marked individually with different identification numbers. Moreover, the location of the electrolyte-saturated pad above the part to be marked would make it difficult to control the supply of electrolyte to the stencil and the part so as to assure uniformly satisfactory results.

The present invention has for its principal object to provide an improved apparatus capable of marking conductive metal objects, such as metallic cladding tubes for nuclear fuel rods, with sequential identification indicia in a high quality, repeatable manner.

Accordingly, the invention resides in an electrolytic etching apparatus as characterized in claim 1 or any of the subordinate claims appended thereto.

In order that the features and advantages of the invention may become more readily apparent, a preferred embodiment of the invention will now be described, by way of example only, with reference to the accompanying drawings, in which:
Fig. 1 is a top plan view of an electrolytic etching apparatus embodying the invention;
Fig. 2 is a side elevational view of the apparatus as seen along line 2--2 of Fig. 1;
Fig. 3 is an end elevational view of the apparatus as seen along line 3--3 of Fig. 1;
Fig. 4 is an end elevational view of a lower electrode removed from the electrolytic etching apparatus of Figs. 1-3;
Fig. 5 is a side elevational view of the lower electrode as seen along line 5--5 of Fig. 4;
Fig. 6 is a side elevational view of an upper electrode and insulator member removed from the electrolytic etching apparatus of Figs. 1-3;
Fig. 7 is a top plan view of the upper electrode and insulator removed from the apparatus of Figs. 1-3;
Fig. 8 is a top plan view of the upper electrode removed from the apparatus of Figs. 1-3;
Fig. 9 is a side elevational view of the upper electrode as seen along line 9--9 of Fig. 8;
Fig. 10 is an end elevational view of the upper electrode as seen along line 10--10 of Fig. 8;
Fig. 11 is a fragmentary top plan view of a continuous stencil employed in the electrolytic etching apparatus of Figs. 1-3;
Fig. 12 is a side elevational view of a modification of the upper electrode and insulator member; and
Fig. 13 is a longitudinal sectional view of the electrolytic etching apparatus of Figs. 1-3, illustrating the apparatus as carrying out an electrolytic etching action for marking an identification indicia on a metal tube.

In the following description, like references characters designate like or corresponding parts throughout the several views, and terms such as "forward", "rearward", "left", "right", "upwardly", "downwardly", and the like, are used as words of convenience not to be construed as limiting terms.

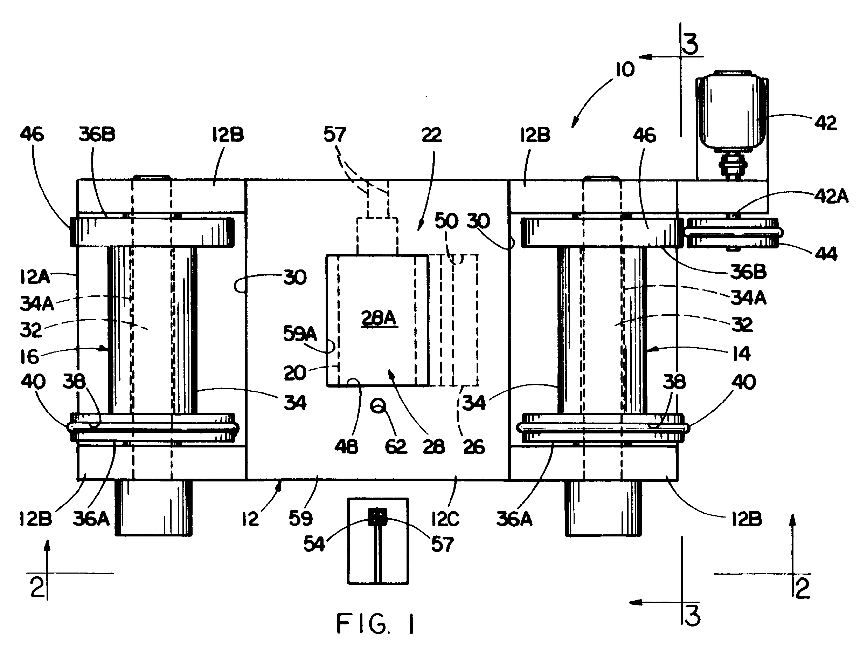

Referring now to the drawings, and particularly to Figs. 1-3 and 13, the electrolytic etching apparatus shown therein and generally designated with reference numeral 10 is adapted to be utilized for marking metal tubes T, one at a time, with identification indicia, such as identification numbers in a chronological sequence. Basically, the apparatus 10 comprises a stationary base 12, a pair of spools 14, 16 spaced apart and rotatably mounted on the base 12, a pair of upper and lower electrodes 18, 20 defining an etching station, generally designated 22, located between the spools 14, 16, a continuous strip of stencil 24 wound at its opposite ends about the spools 14, 16 and extending therebetween and between and past the upper and lower electrodes 18, 20, a reservoir 26 of electrolyte 26A supported on the base 12, and a wicking pad 28 extending over and in contact with the lower electrode 20 and downwardly into the reservoir 26 of the electrolyte 26A.

More particularly, the base 12 has a bottom portion 12A with opposite upstanding side portions 12B extending from opposite ends thereof and joined by an intermediate block portion 12C of the base. The base 12 is composed of a suitable non-conductive material, for example a synthetic material such as nylon. The two pairs of side portions 12B, the parts of the bottom portion 12A extending therebetween, and the opposite end surfaces of the block portion 12C define opposite end cavities 30 which accommodate the spools 14, 16.

The spools 14, 16 are rotatably supported from the respective pairs of side portions 12B by means of axle bolts 32 which extend transversely across the base 12, the spools 14, 16 and axle bolts 32 being composed of a suitable non-conductive material, for example a plastic such as polyurethane, and the spools 14, 16 having substantially identical constructions. Each spool 14 or 16 has an elongate cylindrical body 34 with an axial bore 34A therethrough for the associated axle bolt 32, and a pair of annular end flanges 36 attached to the opposite ends of the cylindrical body 34 and which are larger in diameter than the body 34. The strip of stencil 24 is wound around the cylindrical bodies 34 of both spools 14, 16.

One annular end flange 36A of each spool 14, 16 has formed therein a peripheral groove 38 in which is seated an O-ring 40. The O-rings 40, composed for example of rubber, can be frictionally engaged by the fingers of an operator to facilitate manual rotation of the spools 14, 16. Alternatively, powered spool driving means can be used, comprising a motor 42 with an output shaft 42A carrying a friction drive gear 44 which is frictionally engaged with a cylindrical surface 46 on the periphery of the other end flange 36B of one spool 14, the other spool 16 being free-wheeling.

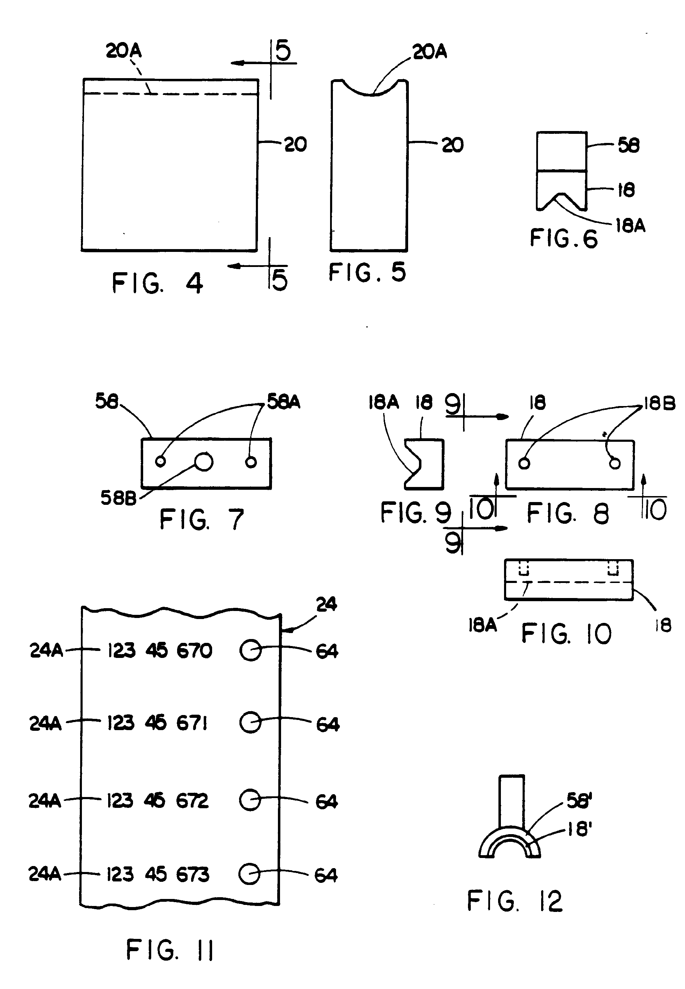

The upper electrode 18 (see also Figs. 6-10) and the lower electrode 20 (see also Figs. 4-5) have the form of rectangular blocks composed of a suitable conductive metal, such as stainless steel, and having lower and upper concavely curved facing surfaces 18A, 20A, respectively, the arcuate shape of which complements the opposite exterior surface portions of the tubes T to be marked. The block of the upper electrode 18 is much smaller in height than the block of the lower electrode 20.

The middle block portion 12C of the base 12 has formed therein a recess 48 in which the lower electrode 20 is seated between the spools 14, 16, and another recess 50 which contains the electrolytic reservoir 26, the latter being located below the stencil 24 and the upper facing surface 20A of the lower electrode 20. The electrolyte 26A can be any suitable solution capable of serving as the conducting medium for the etching current and of providing the necessary salts to etch the metal tube and to deposit an oxide for a contrasting mark.

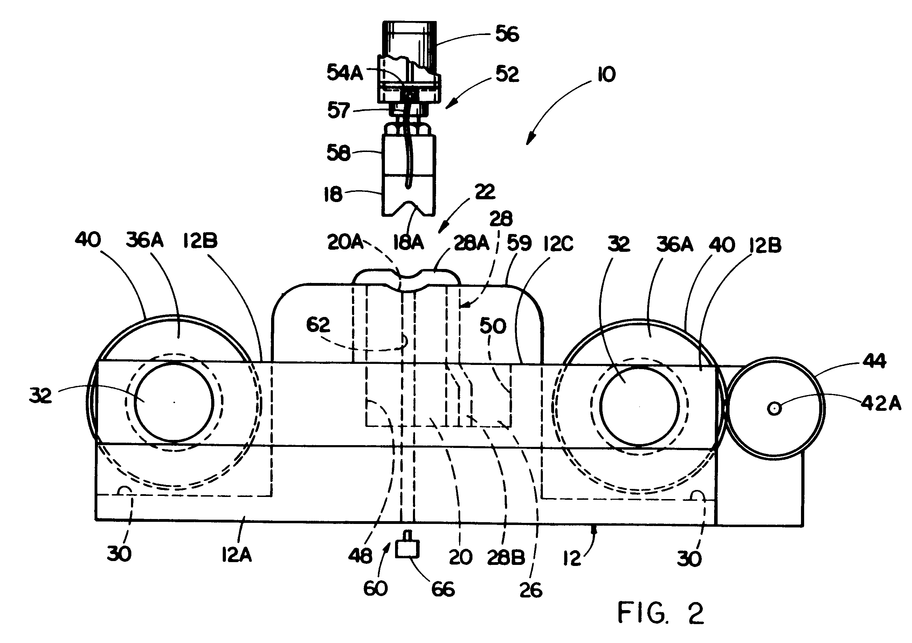

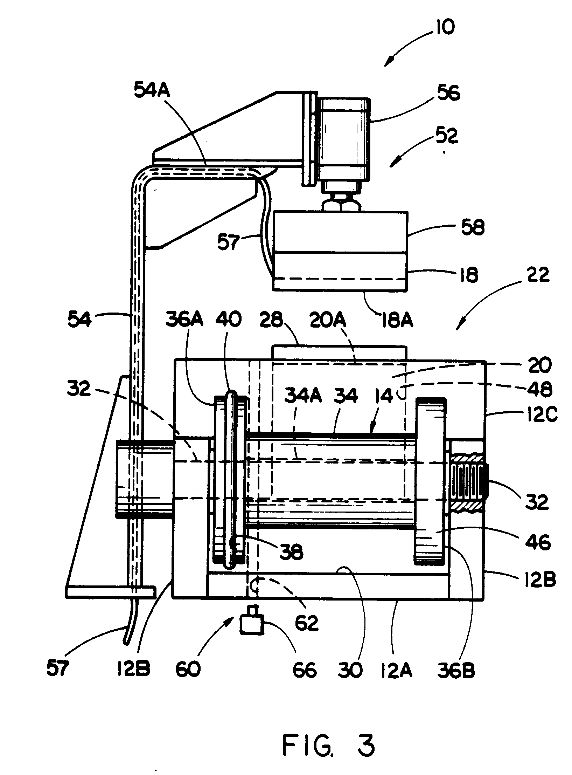

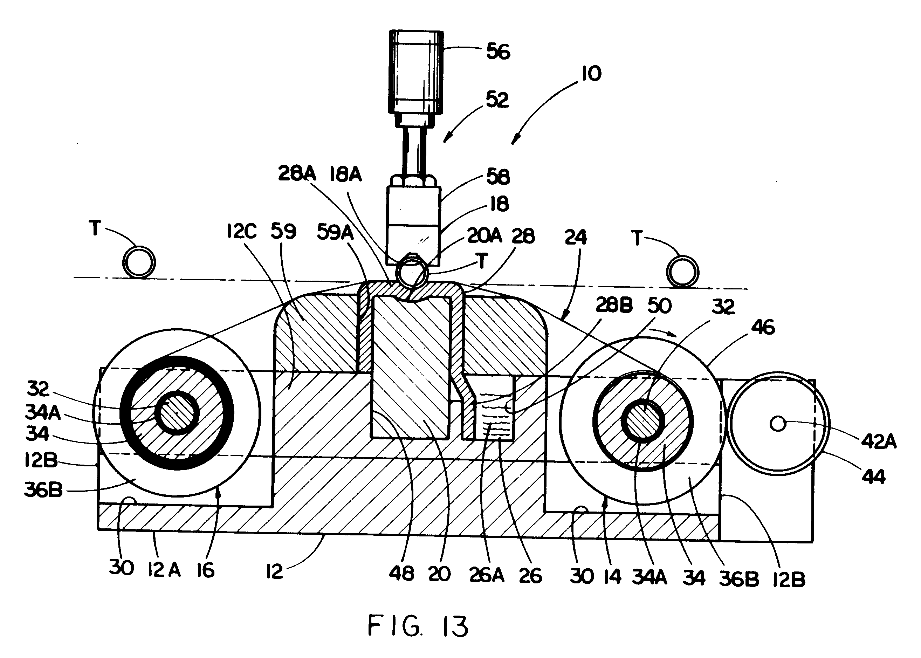

The apparatus 10 also includes means 52 for supporting the upper electrode 18 above and in alignment with the lower electrode 20, and for moving the upper electrode 18 toward and away from the lower electrode 20. More particularly, the upper-electrode supporting and moving means 52 comprises an elongate bracket 54 (Fig. 3) mounted in an upright position adjacent the base 12, and an extendable and retractable actuator 56, such as an air cylinder, supported from an upper horizontal portion 54A of the bracket 54. The upper electrode 18 is connected to the actuator 56 by means of an insulating member 58 which has the upper electrode 18 fastened to its underside by means of suitable fasteners (not shown) inserted into aligned holes 18B, 58A provided in the upper electrode and the insulating member, and which itself is fastened to a plunger 56A of the actuator 56 extending into a hole 58B provided in the insulator 58. The actuator 56 is operable to move the upper electrode 18 to an extended position (Fig. 13) and to a retracted or home position (Fig. 2), i.e. toward and away from, respectively, the lower electrode 20 stationarily positioned on the base 12. The operation of the actuator 56 can be precisely controlled to press the upper electrode 18 downwardly against each tube T at the etching station 22 with a predetermined amount of pressure giving the desired etching result.

Referring to Fig. 11, it shows a fragmentary portion of the strip of stencil 24 which extends between and is wound about the spools 14, 16. The stencil 24 is a thin sheet of material with a coating of high dielectric value, and it is imprinted preferably with a chronological sequence of spaced identification indicia, an example of which is depicted in Fig. 11. Preferably, the stencil 24 is prepared by using a computer program to imprint the serialized numbers. The character created is a seven segment digit which is legible to an optical character reader. The stencil 24 can be printed with a dot matrix printer. The imprint from the dot matrix printing head removes an insulating material from the film of the stencil 24. Rotation and indexing of the spools 14, 16 advances successively each of the portions 24A of the stencil with one identification indicia impressed thereon to a position between the facing surfaces 18A, 20A of the upper and lower electrodes 18, 20.

The wicking pad 28 of the apparatus 10 is an absorbent fibrous material capable of holding the electrolyte 26A. The wicking pad 28 rests on the upper facing surface 20A of the lower electrode 20. More particularly, the pad 28 has a main or wetting portion 28A which extends in a draped fashion over and in contact with the upper facing surface 20A of the lower electrode, as best shown in Fig. 13. The wicking pad main portion 28A is disposed directly below an identification indicia-bearing portion 24A of the stencil 24 positioned at the etching station 22. The wicking pad 28 also has an end portion 28B which extends from the main portion 28A downward into the reservoir 26 so as to draw therefrom electrolyte 26A through capillary action and in a self-regulating manner such as to provide a steady flow of the electrolyte 26A to the main portion 28A of the wicking pad. A cover 59 having a central opening 59A for accommodating the wicking pad 28 and an upper portion of the lower electrode 20 is fitted over the pad and the electrode upper portion so as to hold the pad in place. The cover 59 is composed of any suitable non-conductive material, for example a synthetic material such as nylon.

Since the advanced stencil portion 24A overlies the wicking pad main portion 28A and the lower electrode 20, downward pressure applied by the upper electrode 18 upon the tube T will cause physical and electrical contact to be completed between the stencil portion and the wicking pad 28 with the electrolyte 26A thereon and the lower electrode 20 therebelow. Then, upon application, for a predetermined period of time, of a predetermined steady voltage to the upper and lower electrodes 18, 20 through electrical conductors 57, an electrolytic etching action is carried out which marks the tube with the identification indicia on the particular stencil portion 24A disposed at the etching station 22. The color and degree of thickness of the mark etched on the tube can be regulated by controlling the voltage and time. The etched mark does not cause any detectable dimensional or structural changes in the tube nor does it cause corrosion.

The apparatus 10 further includes means, generally designated 60, for facilitating and ensuring precise alignment of each portion 24A of the stencil 24 imprinted with one of the identification indicia at the etching station 22 between the upper and lower electrodes 18, 20. The alignment means 60 comprises a hole 62 formed through the middle block portion 12C of the base 12 adjacent to and in alignment with the electrodes 18, 20; a plurality of holes 64 formed in the respective portions 24A of the stencil 24 adjacent the respective identification indicia imprinted thereon, each of the stencil holes 64 being alignable with the base hole 62 by moving the particular stencil portion 24A into the etching station 22 between the electrodes 18, 20; and means 66, such as a photo-optic detector device, for detecting when a stencil hole 64 has been moved into alignment with the base hole 62. The detector device 66 is connected to the motor 42 in a manner (not shown) for controlling it so as to stop when the respective stencil portion 24A is precisely positioned at the etching station 22.

Regardless of whether the O-ring 40 or the motor 42 is used to rotate the spool 14, it is through rotation of the spool 14 that the stencil 24 is moved and indexed to successively position the sequenced identification indicia imprinted thereon at the etching station 22. By matching the hole 62 in the base 12 with the correct hole 64 in the stencil 24 adjacent the identification number to be etched on the tube T, the portion 24A of the stencil 24 containing the correct number is brought into proper alignment with the lower and upper facing surfaces 18A, 20A of the upper and lowerelectrodes 18 and 20, whereby etching of successive metal tubes T is facilitated.

Fig. 12 illustrate merely an alternative configuration of the upper electrode 18′ and its insulator 58′.

Referring to Fig. 13, each electrolytic etching operation performed by means of the apparatus 10 involves initially rotating the spools 14, 16 manually or automatically so as to move the stencil portion 24A with the desired identification indicia imprinted thereon into the etching station 22 between the upper and lower electrodes 18,20, accurate positioning of said stencil portion 24A at the etching station 22 being ensured through alignment of the associated stencil hole 64 with the hole 62 in the base 12. With the desired identification indicia thus properly positioned, the metal tube T to be marked is placed between the upper electrode 18 and the stencil portion 24A on the constantly wetted main portion 28A of the wicking pad 28, whereupon the upper electrode 18 is lowered against the metal tube T with a force sufficient to establish good physical and electrical contact between the upper electrode 18 and the tube T, between the tube and the selected stencil portion 24A, between the latter and the wicking-pad main portion 28A wet with electrolyte, and between the wicking-pad main portion 28A and the lower electrode 20. By now applying a predetermined AC voltage to the electrodes 18 and 20, electricity will be caused to flow through this conductive path including the stencil portion 24A and the metal tube T, and thereby will cause the selected indicia to be electrolytically etched into the surface of the tube. By supplying AC power, the metal is alternately etched in the design contained on the selected stencil portion, and is redeposited as an oxide on the tube surface.

With marking of the tube T thus completed, the actuator 56 is operated to lift the upper electrode 18 from the marked tube T, thereby enabling the latter to be removed from the etching station 22 and to be replaced with the next tube to be marked, for which purpose the stencil 24 is moved and indexed to present the next indicia portion 24A thereof to the etching station 22, whereupon the sequence of operative steps described above is repeated.

## Claims

1. An electrolytic etching apparatus (10) for marking metal tubes (T) with identification indicia, characterized by the combination comprising:
(a) a pair of rotatable spools (14,16) spaced from each other in one direction;
(b) a movable electrode (18) and a stationary electrode (20) spaced from each other in a direction substantially perpendicular to said one direction and defining therebetween an etching station (22) located intermediate said pair of spools (14,16), said electrodes (18,20) being adapted to have a predetermined voltage applied thereto;
(c) a continuous stencil (24) having portions (24A) thereof imprinted with identification indicia, said stencil (24) being wound at opposite ends thereof about said spools (14,16) and extending through said etching station (22) so as to enable the imprinted stencil portions (24A) to be sequentially moved into said etching station through rotation of said spools;
(d) an electrolyte reservoir (26) disposed at a level below said etching station (22); and
(e) a wicking pad (28) having a wetting portion (28A) interposed, at said etching station (22), between the stationary electrode (20) and the stencil (24), and an end portion (28B) extending into said electrolyte reservoir (26) for drawing therefrom electrolyte (26A) through capillary action and conducting the electrolyte to said wetting portion (28A) in a steady self-regulating flow;
said movable electrode (18) having a home position in which it is spaced from the stationary electrode (20) a distance sufficient to enable a metal tube (T) to be placed between the movable electrode (18) and the imprinted stencil portion (24A) positioned in the etching station (22), and being movable from said home position toward the stationary electrode (20) and against the metal tube (T) disposed in the etching station, thereby to press said metal tube against said imprinted stencil portion (24A), press the latter against the wetting portion (28A) of the wicking pad (28), and press said wetting portion (28A) against the stationary electrode (20).

2. An electrolytic etching apparatus according to claim 1, characterized in that said movable and stationary electrodes (18,20) have mutually opposite surface portions (18A, 20A) facing each other and concavely shaped to complement exterior surface portions of the metal tube (T) to be marked.

3. An electrolytic etching apparatus according to claim 1 or 2, characterized by means (42) for driving said spools (14,16) in a manner causing said stencil (24) to be advanced and indexed so as to present said imprinted stencil portions (24A) successively to said etching station (22).

4. An electrolytic etching apparatus according to claim 3, characterized in that said means (42) for driving the spools is a drive motor (42) drivingly connected to one (14) of the spools through a friction drive gear (44).

5. An electrolytic etching apparatus according to claim 1, 2 or 3, characterized by means (52) supporting the movable electrode (18) in alignment with the stationary electrode (20) and including an extendable and retractable actuator (56) operable to move the movable electrode (18) toward and away from the stationary electrode (20).

6. An electrolytic etching apparatus according to any one of the preceding claims, characterized in that at least one of said spools (14,16) has an O-ring (40) disposed on the periphery thereof to facilitate manual rotation of the spools.

7. An electrolytic etching apparatus according to any one of the preceding claims, characterized by a base (12) supporting said pair of rotatable spools (14,16) together with said continuous stencil (24) wound thereon, said movable and stationary electrodes (18, 20), said electrolyte reservoir (26), and said wicking pad (28).

8. An electrolytic etching apparatus according to any one of the preceding claims, characterized by means (60) for facilitating accurate alignment of each imprinted stencil portion (24A) with the movable and stationary electrodes (18,20) at said etching station (22).

9. An electrolytic etching apparatus according to claim 7, characterized in that said base (12) has a hole (62) formed therethrough adjacent to and in alignment with the movable and stationary electrodes (18,20), and said stencil (24) has therein a plurality of holes (64) each formed through one of said imprinted stencil portions (24A) and aligned with said hole (62) in the base (12) when the imprinted stencil portion (24A) associated with the particular hole (64) is properly positioned at said etching station (22).

10. An electrolytic etching apparatus according to claim 9, characterized by means (66) for detecting when one of said holes (64) in the various imprinted stencil portions (24A) is aligned with said hole (62) in the base (12).

## Patentansprüche

1. Elektrolyt-Ätzeinrichtung (10) zur Markierung von Metallrohren (T) mit Identifikationsmarken, gekennzeichnet durch die folgende Kombination:
a) zwei drehbare Spindeln (14, 16), die in einer Richtung gegenseitigen Abstand voneinander haben,
b) eine bewegliche Elektrode (18) und eine feststehende Elektrode (20), die einen Abstand voneinander in einer zu der genannten einen Richtung etwa senkrechten Richtung haben und zwischen sich eine Ätzstation (22) bilden, die zwischen den beiden Spindeln (14, 16) gelegen ist, wobei die Elektroden (18, 20) für das Anlegen einer vorgegebenen Spannung ausgelegt sind,
c) eine kontinuierliche Schablone (24) mit Bereichen (24A), in welche Identifikationsmarken eingeprägt sind, wobei die Schablone (24) mit ihren entgegengesetzten Enden um die Spindeln (14, 16) gewickelt ist und durch die Ätzstation (22) hindurchverläuft, so daß die eingeprägten Schablonenbereiche (24A) durch Drehung der Spindeln nacheinander in die Ätzstation bewegbar sind,
d) ein Elektrolytbehälter (26), der auf einer Ebene unterhalb der Ätzstation (22) angeordnet ist, und
e) ein Dochtkissen (28) mit einem Benetzungsbereich (28A), der an der Ätzstation (22) zwischen der feststehenden Elektrode (20) und der Schablone (24) angeordnet ist, und einem in den Elektrolytbehälter (26) hineinragenden Ätzbereich (28B) zum Ansaugen von Elektrolyt (26A) durch Kapillarwirkung und Weiterleiten des Elektrolyts zum Benetzungsbereich (28A) in stetigem, selbstregulierendem Fluß,
wobei die bewegliche Elektrode (18) eine Ruhestellung aufweist, in welcher sie einen ausreichenden Abstand von der feststehenden Elektrode (20) hat, damit ein Metallrohr (T) zwischen die bewegliche Elektrode (18) und den eingeprägten Schablonenbereich (24A) in der Ätzstation 822) eingelegt werden kann, und aus der Ruhestellung zu der feststehenden Elektrode (20) und an das in der Ätzstation befindliche Metallrohr (T) hin bewegbar ist, um dadurch das Metallrohr gegen den eingeprägten Schablonenbereich (24A) und diesen gegen den Benetzungsbereich (28A) des Dochtkissens (28) und diesen Benetzungsbereich (28A) wiederum gegen die feststehende Elektrode (20) zu drücken.

2. Elektrolyt-Ätzeinrichtung nach Anspruch 1, dadurch gekennzeichnet, daß die bewegliche und die feststehende Elektrode (18, 20) einander zugewandte Oberflächenbereiche (18A, 20A) aufweisen, die konkav geformt sind, um sich den Außenoberflächenbereichen des zu markierenden Metallrohrs (T) anzupassen.

3. Elektrolyt-Ätzeinrichtung nach Anspruch 1 oder 2, gekennzeichnet durch Mittel (42) zum Antrieb der Spindeln (14, 16) in einer den Vorschub und das Indexieren der Schablone (24) bewirkenden Weise, um nacheinander die eingeprägten Schablonenbereiche (24A) in die Ätzstation (22) zu bringen.

4. Elektrolyt-Ätzeinrichtung nach Anspruch 3, dadurch gekennzeichnet, daß die Mittel (42) zum Antrieb der Spindeln einen Antriebsmotor (42) aufweisen, der über ein Reibgetriebe (44) mit einer (14) der Spindeln in Antriebsverbindung steht.

5. Elektrolyt-Ätzeinrichtung nach Anspruch 1, 2 oder 3, gekennzeichnet durch Mittel (52), welche die bewegliche Elektrode (18) mit der feststehenden Elektrode (20) fluchtend haltern und ein ausfahrbares und zurückziehbares Betätigungsorgan (56) aufweisen, das zum Bewegen der beweglichen Elektrode (18) zu der feststehenden Elektrode (20) hin und von dieser weg betätigbar ist.

6. Elektrolyt-Ätzeinrichtung nach einem der vorhergehenden Ansprüche, dadurch gekennzeichnet, daß mindestens eine der Spindeln (14, 16) an ihrem Umfang einen O-Ring (40) trägt, um ein manuelles Drehen der Spindeln zu erleichtern.

7. Elektrolyt-Ätzeinrichtung nach einem der vorhergehenden Ansprüche, gekennzeichnet durch einen Sockel (12), der die beiden drehbaren Spindeln (14, 16) mit der um diese gewickelten kontinuierlichen Schablone (24), die bewegliche und die feststehende Elektrode (18, 20), den Elektrolytbehälter (26) und das Dochtkissen (28) trägt.

8. Elektrolyt-Ätzeinrichtung nach einem der vorhergehenden Ansprüche, gekennzeichnet durch Mittel (60) zum Erleichtern der genauen Ausrichtung jedes eingeprägten Schablonenbereichs (24A) mit Bezug auf die bewegliche und die feststehende Elektrode (18, 20) an der Ätzstation (22).

9. Elektrolyt-Ätzeinrichtung nach Anspruch 7, dadurch gekennzeichnet, daß der Sockel (12) eine darin gebildete Öffnung (62) aufweist, die nahe der beweglichen und der feststehenden Elektrode (18, 20) und damit fluchtend angeordnet ist, und daß die Schablone (24) eine Mehrzahl von Öffnungen (64) aufweist, die jeweils einen der eingeprägten Schablonenbereiche (24A) durchdringen und mit der Öffnung (62) in dem Sockel (12) fluchten, wenn der zu der jeweiligen Öffnung (64) gehörende eingeprägte Schablonenbereich (24A) richtig in der Ätzstation (22) positioniert ist.

10. Elektrolyt-Ätzeinrichtung nach Anspruch 9, gekennzeichnet durch Mittel zum Feststellen, ob eine der Öffnungen (64) in den verschiedenen eingeprägten Schablonenbereichen (24A) mit der Öffnung (62) im Sockel (12) fluchtet.

## Revendications

1. Appareil de gravure électrolytique (10) pour marquer des repères d'identification sur des tubes métalliques (T), caractérisé par l'ensemble comprenant:
(a) une paire de bobines rotatives (14, 16) espacées l'une de l'autre dans une première direction;
(b) une électrode mobile (18) et une électrode fixe (20) espacées l'une de l'autre dans une direction sensiblement perpendiculaire à ladite première direction et définissant entre elles un poste de gravure (22) situé entre les bobines (14, 16) de ladite paire, lesdites électrodes (18, 20) étant conçues pour qu'une tension prédéterminée leur soit appliquée;
(c) un pochoir continu (24) dans des parties (24A) duquel sont imprimés des repères d'identification, ledit pochoir (24) étant enroulé, à ses extrémités opposées, autour desdites bobines (14, 16) et s'étendant à travers ledit poste de gravure (22) de façon à permettre aux parties imprimées (24A) du pochoir de venir séquentiellement dans ledit poste de gravure du fait de la rotation desdites bobines;
(d) un réservoir (26) d'électrolyte disposé à un niveau sous ledit poste de gravure (22); et
(e) un tampon imprégnable (28) ayant une partie humectante (28A) intercalée au niveau dudit poste de gravure (22), entre l'électrode fixe (20) et le pochoir (24), et une partie formant extrémité (28B) s'étendant jusque dans ledit réservoir (26) d'électrolyte pour attirer de l'électrolyte (26A) par capillarité depuis celui-ci et faire venir l'électrolyte jusqu'à ladite partie humectante (28A) à un débit stable autorégulé;
ladite électrode mobile (18) ayant une position de repos dans laquelle elle est espacée de l'électrode fixe (20) d'une distance suffisante pour permettre la mise en place d'un tube métallique (T) entre l'électrode mobile (18) et la partie imprimée (24A) du pochoir disposée dans le poste de gravure (22), et pouvant se déplacer depuis ladite position de repos vers l'électrode fixe (20) et contre le tube métallique (T) disposé dans le poste de gravure, pour presser de ce fait ledit tube métallique contre ladite partie imprimée (24A) du pochoir, presser cette dernière contre la partie humectante (28A) du tampon imprégnable (28), et presser ladite partie humectante (28A) contre l'électrode fixe (20).

2. Appareil de gravure électrolytique selon la revendication 1, caractérisé en ce que lesdites électrodes mobile et fixe (18, 20) ont des parties formant surfaces mutuellement opposées (18A, 20A) en regard l'une de l'autre et d'une forme concave complémentaire de celle des parties formant surfaces extérieures du tube métallique (T) à marquer.

3. Appareil de gravure électrolytique selon la revendication 1 ou 2, caractérisé par un moyen (42) pour entraîner lesdites bobines (14, 16) de manière à faire avancer ledit pochoir (24) et à le positionner de façon à présenter successivement lesdites parties imprimées (24A) du pochoir audit poste de gravure (22).

4. Appareil de gravure électrolytique selon la revendication 3, caractérisé en ce que ledit moyen (42) pour entraîner les bobines est un moteur d'entraînement (42) relié d'une manière motrice à une (14) des bobines par l'intermédiaire d'une transmission à friction (44).

5. Appareil de gravure électrolytique selon la revendication 1, 2 ou 3, caractérisé par un moyen (52) supportant l'électrode mobile (18) en alignement avec l'électrode fixe (20) et comportant un actionneur (56) pouvant s'avancer et reculer pour rapprocher et éloigner l'électrode mobile (18) de l'électrode fixe (20).

6. Appareil de gravure électrolytique selon l'une quelconque des revendications précédentes, caractérisé en ce qu'au moins une desdites bobines (14, 16) a un joint torique (40) disposé sur son pourtour pour faciliter la rotation manuelle des bobines.

7. Appareil de gravure électrolytique selon l'une quelconque des revendications précédentes, caractérisé par un socle (12) supportant ladite paire de bobines rotatives (14, 16) conjointement avec ledit pochoir continu (24) enroulé sur celles-ci, lesdites électrodes mobile et fixe (18, 20), ledit réservoir (26) d'électyrolyte et ledit tampon imprégnable (28).

8. Appareil de gravure électrolytique selon l'une quelconque des revendications précédentes, caractérisé par un moyen (60) pour faciliter l'alignement précis de chaque partie imprimée (24A) du pochoir avec les électrodes mobile et fixe (18, 20) au niveau dudit poste de gravure (22).

9. Appareil de gravure électrolytique selon la revendication 7, caractérisé en ce que ledit socle (12) a un trou (62) formé à travers celui-ci au voisinage immédiat des avec les électrodes mobile et fixe (18, 20) et en alignement avec elles, et dans ledit pochoir (24) sont ménagés une pluralité de trous (64) formés chacun à travers une desdites parties imprimées (24A) du pochoir et alignés avec ledit trou (62) du socle (12) lorsque la partie imprimée (24A) du pochoir correspondant au trou particulier (64) est convenablement disposée au niveau dudit poste de gravure (22).

10. Appareil de gravure électrolytique selon la revendication 9, caractérisé par un moyen (66) pour détecter l'instant où un desdits trous (64) des diverses parties imprimées (24A) du pochoir est alignée avec ledit trou (62) du socle (12).
